# EUROPEAN PATENT APPLICATION

(11) **EP 4 641 011 A1**
(43) Date of publication of application: **29.10.2025**
(21) Application number: 24193973.5
(22) Date of filing: 09.08.2024
(51) Int. Cl.: F03D 1/00, F03D 80/80

(54) **CABIN STRUCTURE AND WIND TURBINE GENERATOR SET**

(30) Priority: 26.04.2024 CN 202410514723; 26.04.2024 CN 202410514724; 26.04.2024 CN 202410514726; 26.04.2024 CN 202410514725
(71) Applicant: Sany Renewable Energy Co., Ltd., Beijing 102206 (CN)
(72) Inventor: YANG, Yuchuan, Beijing, 102206 (CN); WU, Shengfei, Beijing, 102206 (CN); LIU, Yun, Beijing, 102206 (CN); SHI, Chuan, Beijing, 102206 (CN); RONG, Weidong, Beijing, 102206 (CN); ZHANG, Rongxin, Beijing, 102206 (CN); ZHANG, Qin, Beijing, 102206 (CN); HAO, Junbo, Beijing, 102206 (CN)
(74) Representative: Monteiro Alves, Inês

(57) **Abstract**

Disclosed are a cabin structure and a wind turbine generator set. The cabin structure includes: a cabin body extending along a first direction and a box transformer structure including a box transformer unit and a box transformer bracket. The cabin body is provided with a main body frame, the box transformer bracket is provided at the main body frame and is provided at a side end of the cabin body in a second direction, and the box transformer unit is provided at the box transformer bracket at least for voltage conversion.

## Description

### TECHNICAL FIELD

The present application relates to the technical field of wind power generation, and in particular to a cabin structure and a wind turbine generator set.

### BACKGROUND

At present, in the cabin of most wind turbine generator sets, a power transformation structure is placed at the tail of a rear bottom frame, and the power transformation structure is supported by the lengthened rear bottom frame. However, lengthening the rear bottom frame to support the power transformation structure will aggravate the vibration of the entire cabin, resulting in reduced stability of the wind turbine generator set.

### SUMMARY

The main purpose of the present application is to propose a cabin structure and a wind turbine generator set, aiming to alleviate the problem of reduced stability of the wind turbine generator set caused by the transformer structure being placed at the rear of the cabin in the existing wind turbine generator set.

To achieve the above purpose, the cabin structure proposed by the present application is applied to the wind turbine generator set, and the cabin structure includes:
a cabin body extending along a first direction, the cabin body being provided with a main body frame; and
a box transformer structure including a box transformer unit and a box transformer bracket, the box transformer bracket being provided at the main body frame and being provided at a side end of the cabin body in a second direction, and the box transformer unit being provided at the box transformer bracket at least for voltage conversion.

In an embodiment, the main body frame includes a main frame, the main frame is configured to install a rotor of the wind turbine generator set, and the box transformer bracket is provided at the main frame.

In an embodiment, the cabin body includes a cabin housing, and the cabin housing is configured to cover a periphery of the main body frame;
a side end of the main frame is configured to extend out of a switching portion provided at the cabin housing; and
the box transformer bracket is provided with a connecting portion, and the connecting portion is detachably provided at the switching portion.

In an embodiment, the switching portion and the connecting portion correspond one-to-one to form a switching assembly, and two switching assemblies are provided at both ends of the box transformer bracket in the first direction.

In an embodiment, the switching portion is detachably connected to the main frame.

In an embodiment, the switching portion is connected to the main frame by a flange bolt connection structure, and/or the connecting portion is connected to the switching portion by a flange bolt connection structure.

In an embodiment, the switching portion is connected to the main frame by a plug-in bolt connection structure, and/or the connecting portion is connected to the switching portion by a plug-in bolt connection structure.

In an embodiment, a positioning structure is provided between the main frame and the switching portion, and/or a positioning structure is provided between the switching portion and the connecting portion, so as to position the switching portion to the main frame and position the connecting portion to the switching portion in a third direction.

In an embodiment, the positioning structure includes a positioning protrusion, the positioning protrusion is formed at the main frame and is correspondingly abutted against a bottom of the switching portion in the third direction.

In an embodiment, a matching slot is provided at the switching portion corresponding to the connecting portion, the positioning structure includes a positioning pin extending along the second direction, and the positioning pin is provided at the connecting portion to be correspondingly plugged into the matching slot at the switching portion.

In an embodiment, the box transformer structure includes two box transformer units and a box transformer bracket, the box transformer bracket is provided at the main body frame and is provided at a side end of the cabin body in the second direction, and the two box transformer units are provided at the box transformer bracket along the first direction.

In an embodiment, the box transformer bracket is connected to the main body frame through a switching assembly, three switching assemblies are provided at intervals in the first direction, and the box transformer unit is provided between two adjacent switching assemblies.

In an embodiment, the box transformer bracket is provided with a plurality of installation portions corresponding to the box transformer unit, the box transformer unit includes a box transformer base and a plurality of transformers, the plurality of transformers are provided at the box transformer base in the first direction, and the box transformer base is connected to the plurality of installation portions.

In an embodiment, the box transformer unit further includes:
a box transformer top cover connected to a plurality of transformers and configured to cover the plurality of transformers; and
a plurality of tensioning structures provided at a peripheral side of the box transformer bracket to tension and connect the box transformer top cover and the box transformer bracket.

In an embodiment, the box transformer top cover is provided with four top corners at a peripheral side of the box transformer top cover, and four tensioning structures are provided corresponding to the four top corners respectively.

In an embodiment, the box transformer bracket includes two tensioning brackets, one of the two tensioning brackets is provided at one side of the box transformer top cover along the first direction, the other one of the two tensioning brackets is provided at the other side of the box transformer top cover along the first direction, both the two tensioning brackets are configured to extend close to the box transformer top cover, and
four tensioning structures are respectively installed at the two tensioning brackets in groups of two.

In an embodiment, the tensioning structure is provided with two tensioning portions, one of the two tensioning portions is connected to the box transformer top cover, the other one of the two tensioning portions is connected to the box transformer bracket, and a distance between the two tensioning portions is adjustable.

In an embodiment, the tensioning structure includes a turnbuckle bolt, and two hook ropes of the turnbuckle bolt include the two tensioning portions.

In an embodiment, the two tensioning portions include a top cover tensioning portion and a bracket tensioning portion, the top cover tensioning portion is provided at the box transformer top cover, the bracket tensioning portion is provided at the box transformer bracket, and the top cover tensioning portion is provided away from the box transformer base in a third direction relative to the bracket tensioning portion.

In an embodiment, the main body frame includes a rear bottom frame, the rear bottom frame is configured to install a main control cabinet, and the box transformer bracket is provided at the rear bottom frame.

In an embodiment, two box transformer structures are provided, one box transformer bracket of the two box transformer structures is provided at one side end of the rear bottom frame, and the other box transformer bracket of the two box transformer structures is provided at the other side end of the rear bottom frame.

In an embodiment, the cabin body includes a cabin housing, and the cabin housing is configured to cover a periphery of the main body frame; and

the box transformer structure further includes a box transformer housing, and the box transformer housing is configured to cover a periphery of the box transformer bracket and is connected to the cabin housing.

In an embodiment, the box transformer bracket is connected to an inner wall of the box transformer housing through a bearing assembly.

In an embodiment, a plurality of bearing assemblies are provided at both sides of the box transformer bracket in the first direction, and are provided at intervals in a third direction.

In an embodiment, the bearing assembly includes a bearing portion and a placement portion, the bearing portion is provided at the box transformer bracket, the placement portion is provided at an inner wall of the box transformer housing, and the bearing portion is configured to to support the placement portion in a third direction.

In an embodiment, a heat dissipation window communicating with an external environment is provided at a bottom of the box transformer housing in a third direction.

In an embodiment, the box transformer unit includes a plurality of transformers, and the plurality of transformers are provided along the first direction; and
a plurality of the heat dissipation windows are provided in the first direction corresponding to the plurality of transformers.

In an embodiment, the box transformer housing is formed by splicing a plurality of partial housings.

In an embodiment, the main body frame includes a main frame and a rear frame, the main frame is configured for installing a rotor of the wind turbine generator set, and the rear frame is configured to install the main control cabinet; and
one end of the box transformer bracket in the first direction is installed at the main frame, and the other end of the box transformer bracket in the first direction is installed at the rear frame.

In an embodiment, the box transformer bracket includes:
a bearing crossbeam extending along the first direction to form a first end corresponding to the main frame and a second end corresponding to the rear bottom frame; and,
two connecting longitudinal beams extending along the second direction, one of the two connecting longitudinal beams being configured to connect a first end of the bearing crossbeam with the main frame, the other one of the two connecting longitudinal beams being configured to connect the second end of the bearing crossbeam with the rear bottom frame; and
the box transformer unit provided at the bearing crossbeam.

In an embodiment, a plurality of installation portions are provided at both sides of the bearing crossbeam in the second direction, and the plurality of installation portions at a same side of the bearing crossbeam are provided at intervals in the first direction; and
the box transformer unit is connected to the plurality of installation portions.

In an embodiment, the plurality of installation portions on different sides of the bearing crossbeam are provided opposite to each other in groups of two.

In an embodiment, the box transformer bracket further includes a reinforcing crossbeam, the reinforcing crossbeam is provided opposite to the bearing crossbeam in the second direction, and one end of the reinforcing crossbeam is provided at one of the two connecting longitudinal beams, and the other end of the reinforcing crossbeam is provided at the other one of the two connecting longitudinal beams.

In an embodiment, the connecting longitudinal beam is provided with a first connecting section connected to the bearing crossbeam, and a second connecting section connected to the main frame or the rear bottom frame, and a cross-sectional area of the second connecting section in the second direction is larger than a cross-sectional area of the first connecting section in the second direction.

In an embodiment, a size of the second connecting section in a third direction is larger than a size of the first connecting section in the third direction.

In an embodiment, the box transformer bracket includes a plurality of I-beams, and the plurality of I-beams include the bearing beam and the two connecting longitudinal beams.

The present application further provides a wind turbine generator set, including the cabin structure as mentioned above.

In the technical solution of the present application, by connecting the box transformer bracket with the main body frame, the box transformer unit is installed at the side end of the cabin body. On the one hand, the size of the cabin structure in the first direction can be reduced accordingly, which reduces the difficulty of manufacturing and transporting the cabin structure, and also makes the overall layout of the wind turbine generator set more compact and reasonable in structure. On the other hand, due to the change in the setting position of the box transformer unit, the center of gravity of the entire cabin body is also offset accordingly, and it is a beneficial offset toward the axial direction of the wind turbine tower, so that the vibration amplitude of the cabin body during operation is reduced, and the stability of the wind turbine generator set is improved. Still, on the other hand, compared with the existing scheme in which the transmission cable in the cabin needs to be arranged from the front end of the cabin to the rear end to connect to the power transformation structure and needs to be wound around multiple internal structures, the box transformer unit in the technical solution of the present application is placed on the side, so that the transmission cable does not need to be wired to the tail of the cabin body, and only needs to pass through the side to the box transformer structure, which can optimize the wiring path of the transmission cable and reduce the wiring length of the transmission cable inside the cabin body.

### BRIEF DESCRIPTION OF THE DRAWINGS

To more clearly illustrate technical solutions in the embodiments of the present application or the related art, the following will briefly introduce the drawings that need to be used in the description of the embodiments or the related art. Obviously, the drawings in the following description are only some embodiments of the present application. For those skilled in the art, without creative efforts, other drawings can be obtained according to these drawings.
FIG. 1 is a schematic structural diagram of a cabin structure according to an embodiment of the present application.
FIG. 2 is a schematic diagram of a connection structure between the main body frame and the box transformer bracket of the cabin structure in FIG. 1.
FIG. 3 is a schematic structural diagram of of a switching assembly according to an embodiment in FIG. 2.
FIG. 4 is a schematic structural diagram of a tensioning structure according to an embodiment in FIG. 2.
FIG. 5 is a schematic structural diagram of a box transformer structure according to an embodiment in FIG. 1.
FIG. 6 is a schematic structural diagram of a cabin structure according to an embodiment of the present application.
FIG. 7 is a schematic diagram of the connection structure between the main body frame and the box transformer bracket of the cabin structure in FIG. 6.

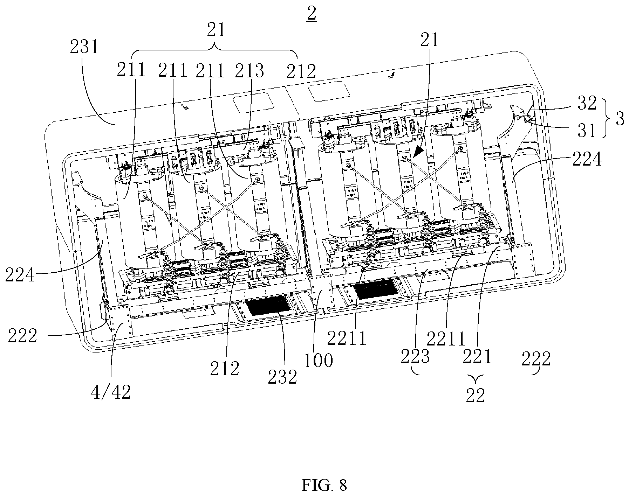

FIG. 8 is a schematic structural diagram of of a box transformer structure according to an embodiment in FIG. 6.
FIG. 9 is a schematic structural diagram of a cabin structure according to an embodiment of the present application.
FIG. 10 is a schematic diagram of a connection structure between the main body frame and the box transformer bracket of the cabin structure in FIG. 9.
FIG. 11 is a schematic structural diagram of the switching assembly according to an embodiment in FIG. 10.
FIG. 12 is a schematic structural diagram of a tensioning structure according to an embodiment in FIG. 10.
FIG. 13 is a schematic structural diagram of a cabin structure according to an embodiment of the present application.
FIG. 14 is a schematic diagram of a connection structure between the main body frame and the box transformer bracket of the cabin structure in FIG. 13.

### Description of reference numbers:

100, cabin structure; 1, cabin body; 11, main body frame; 111, main frame; 112, rear bottom frame; 12, cabin housing; 2, box transformer structure; 21, box transformer unit; 211, transformer; 212, box transformer base; 213, box transformer top cover; 22, box transformer bracket; 221, bearing crossbeam; 2211, installation portion; 222, connecting longitudinal beam; 2221, first connecting section; 2222, second connecting section; 223, reinforcing crossbeam; 224, tensioning bracket; 23, box transformer housing; 231, partial housing; 232, heat dissipation window; 24, tensioning structure; 24a, turnbuckle bolt; 241, tensioning portion; 3, bearing assembly; 31, bearing portion; 32, placement portion; 4, switching assembly; 41, switching portion; 42, connecting portion; 5, positioning structure; 51, positioning protrusion.

The realization of the objective, functional characteristics, and advantages of the present application are further described with reference to the accompanying drawings and in conjunction with embodiments.

### DETAILED DESCRIPTION OF THE EMBODIMENTS

The technical solutions of the embodiments of the present application will be described in detail below with reference to the accompanying drawings. It is obvious that the embodiments described are only some rather than all of the embodiments of the present application. All other embodiments obtained by those skilled in the art based on the embodiments of the present application without creative efforts shall fall within the claimed scope of the present application.

It should be noted that all the directional indications (such as up, down, left, right, front, rear...) in the embodiments of the present application are only used to explain the relative positional relationship, movement, or the like of the components in a certain posture. If the specific posture changes, the directional indication will change accordingly.

Besides, the descriptions associated with, e.g., "first" and "second," in the present application are merely for descriptive purposes, and cannot be understood as indicating or implying relative importance or implicitly indicating the number of the indicated technical feature. Therefore, the feature associated with "first" or "second" can expressly or implicitly include at least one such feature. Further, if "and/or" appears throughout the text, it includes three parallel schemes. Taking "A and/or B" as an example, it includes the scheme A, or the scheme B, or the scheme that the scheme A and the scheme B satisfy at the same time. In addition, the technical solutions of the various embodiments can be combined with each other, but the combinations must be based on the realization of those skilled in the art. When the combination of technical solutions is contradictory or cannot be achieved, it should be considered that such a combination of technical solutions does not exist, nor does it fall within the scope of the present application.

At present, in the cabin structure of most wind turbine generator sets, the power transformation structure is placed at the tail of the rear bottom frame, and the power transformation structure is supported by the lengthened rear bottom frame. As the size and weight of the components of large-megawatt wind turbine generator sets are getting larger and larger, the length and width of the rear bottom frame need to be increased to support these components, which causes certain difficulties in the manufacture and transportation of the rear bottom frame. If the cabin is simply lengthened, the length of the rear bottom frame and the difficulty of manufacturing and processing the rear bottom frame will increase. In addition, lengthening the rear bottom frame to support the power transformation structure will easily cause the center of gravity of the cabin structure to shift backward, thereby aggravating the vibration of the entire cabin structure and reducing the stability of the wind turbine generator set.

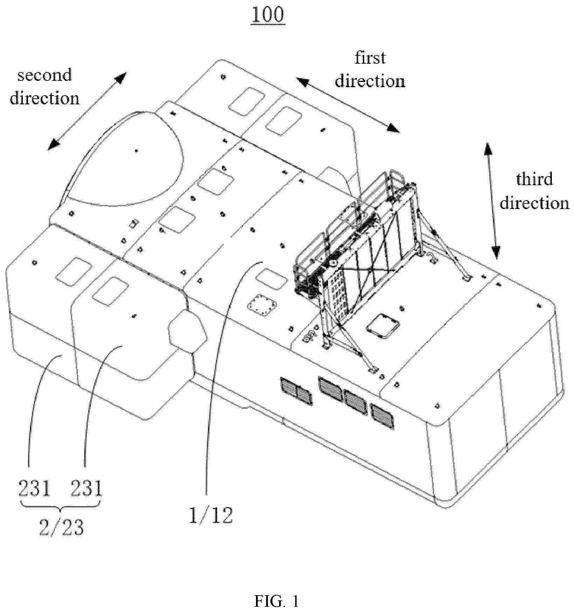

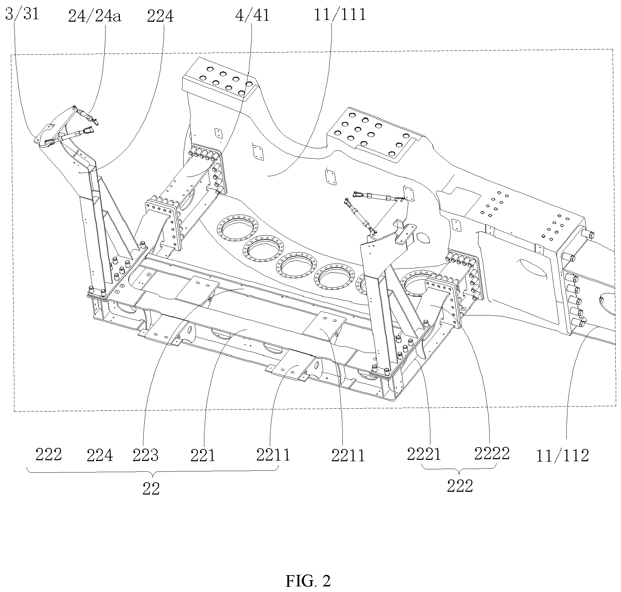

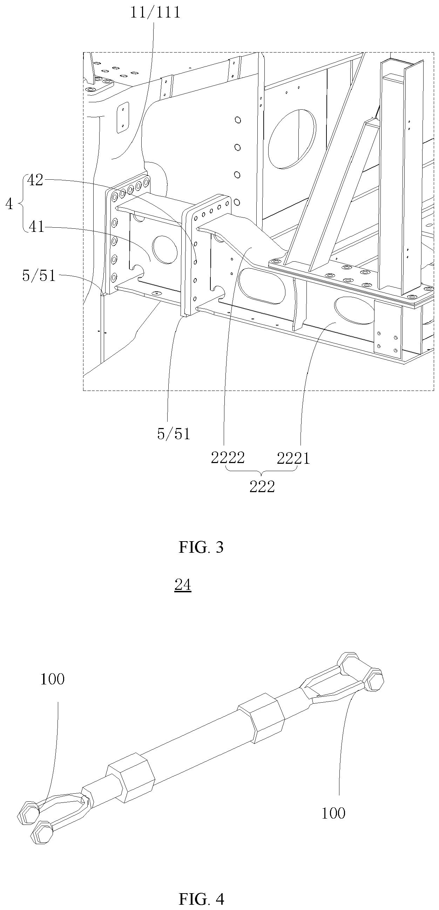

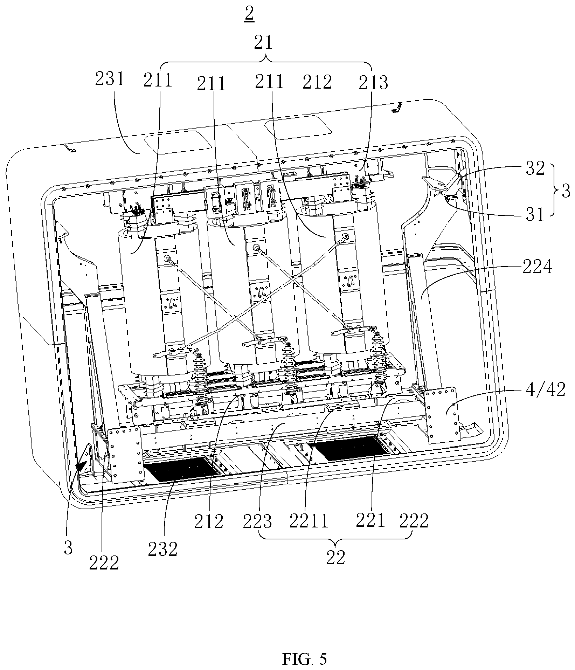

In view of this, the present application proposes a cabin structure and a wind turbine generator set, aiming to alleviate the problem of reduced stability of the wind turbine generator set caused by the transformer structure being placed at the rear of the cabin in the existing wind turbine generator set. FIG. 1 is a schematic structural diagram of a cabin structure according to an embodiment of the present application. FIG. 2 is a schematic structural diagram of a connection structure between the main body frame and the box transformer bracket of the cabin structure in FIG. 1. FIG. 3 is a schematic structural diagram of of a switching assembly according to an embodiment in FIG. 2. FIG. 4 is a schematic structural diagram of a tensioning structure according to an embodiment in FIG. 2. FIG. 5 is a schematic structural diagram of a box transformer structure according to an embodiment in FIG. 1.

As shown in FIG. 1 and FIG. 2, the present application proposes a cabin structure 100 applied to a wind turbine generator set. The cabin structure 100 includes a cabin body 1 and a box transformer structure 2. The cabin body 1 extends along a first direction. The cabin body 1 is provided with a main body frame 11. The main body frame 11 includes a main frame 111. The main frame 111 is used for installing the rotor of the wind turbine generator set. The box transformer structure 2 includes a box transformer unit 21 and a box transformer bracket 22. The box transformer bracket 22 is provided at the main frame 111 and is located at the side end of the cabin body 1 in the second direction. The box transformer unit 21 is provided at the box transformer bracket 22, and is used for voltage conversion.

It should be noted that the cabin body 1 extends along the first direction, one end of the cabin body 1 is provided with the main frame 111, which is usually used for the installation of the rotor and is connected to the wind turbine tower. The other end of the cabin body 1 is usually used for the installation of the main control cabinet and other structures. The box transformer structure 2 is at least used to transform the voltage, and the electric energy generated by the rotor of the wind turbine generator set can be transmitted to the box transformer structure 2 through the cable, so that the voltage is transformed to be suitable for transmission. Not limited to this, the box transformer structure 2 can also have the function of current limiting, and the like, and the specific function of the box transformer structure 2 is not further limited in this embodiment. In the embodiment of the present application, in view of the setting scene of the cabin body 1, the first direction is usually defined as a horizontal direction, and the second direction is usually defined as another horizontal direction perpendicular to the first direction. The number of the box transformer structure 2 can be only one, or both sides of the main frame 111 in the second direction can be provided with one box transformer structure 2.

In the technical solution of the present application, by connecting the box transformer bracket 22 with the main frame 111, the box transformer unit 21 is installed at the side end of the cabin body 1. On the one hand, the size of the cabin structure 100 in the first direction can be reduced accordingly, which reduces the difficulty of manufacturing and transporting the cabin structure 100, and also makes the overall layout of the wind turbine generator set more compact and reasonable in structure. On the other hand, due to the change in the setting position of the box transformer unit 21, the center of gravity of the entire cabin body 1 is also offset accordingly, and it is a beneficial offset toward the axial direction of the wind turbine tower, so that the vibration amplitude of the cabin body 1 during operation is reduced, and the stability of the wind turbine generator set is improved. Still, on the other hand, compared with the existing scheme in which the transmission cable in the cabin needs to be arranged from the front end of the cabin to the rear end to connect to the power transformation structure and needs to be wound around multiple internal structures, the box transformer unit 21 in the technical solution of the present application is placed on the side, so that the transmission cable does not need to be wired to the tail of the cabin body 1, and only needs to pass through the side to the box transformer structure 2, which can optimize the wiring path of the transmission cable and reduce the wiring length of the transmission cable inside the cabin body 1.

As shown in FIG. 1 to FIG. 3, in one embodiment, the cabin body 1 includes a cabin housing 12, which is configured to cover the periphery of the main body frame 11. The side end of the main frame 111 extends out of the switching portion 41 provided at the cabin housing 12. The box transformer bracket 22 is provided with a connecting portion 42, which is detachably provided at the switching portion 41.

It should be noted that the arrangement of the cabin housing 12 can protect the electrical components installed in the cabin body 1 from adverse effects of rain or sunlight. Since the cabin housing 12 covers the main body frame 11, the existence of the cabin housing 12 will interfere with the connection between the box transformer bracket 22 and the main frame 111. There are many ways of detachable connections, which will not be limited in this embodiment.

According to the above technical solution, due to the detachable connection between the switching portion 41 and the connecting portion 42, the box transformer structure 2 and the main frame 111 can be assembled by split hoisting or integral hoisting according to the actual situation. For example, when the wind farm crane is large in size, the box transformer structure 2 and the main frame 111 can be assembled on the ground and then hoisted to the wind turbine tower. When the wind farm crane is small in size, the main frame 111 can be hoisted to the wind turbine tower first, and then the box transformer structure 2 can be hoisted to the main frame 111.

By extending the switching portion 41 of the main frame 111 out of the cabin housing 12, during the process of hoisting the box transformer structure 2 in a separate manner, the connecting portion 42 of the box transformer bracket 22 can be connected to the switching portion 41 outside the cabin housing 12 to prevent the connecting portion 42 from interfering with the cabin housing 12 and damaging the cabin housing 12.

As shown in FIG. 2 and FIG. 3, in one embodiment, the switching portion 41 and the connecting portion 42 correspond to each other to form the switching assembly 4. Two switching assemblies 4 are provided, which are respectively provided at both ends of the box transformer bracket 22 in the first direction.

By providing two switching assemblies 4 at both ends of the box transformer bracket 22 in the first direction, the overall center of gravity of the box transformer unit 21 can fall between the two switching assemblies 4, thereby improving the installation stability of the box transformer structure 2.

In other embodiments, a plurality of switching assemblies 4 can be provided along the first direction.

It should be noted that the main frame 111 and the switching portion 41 can be integrally formed, but there is no position in the existing mold of the main frame 111 designed for the switching portion 41, so the existing mold for the main frame 111 cannot continue to complete the production and manufacturing the integral portion of the main frame 111 and the switching portion 41, and a new mold needs to be developed, which will undoubtedly cause an increase in production costs and waste of molds. In view of this, in one embodiment, the switching portion 41 is detachably connected to the main frame 111.

According to the above technical solution, the switching portion 41 is detachably connected to the main frame 111, so that the main frame 111 and the switching portion 41 can be manufactured separately, and the main frame 111 can be manufactured by using the existing main frame mold, without developing a new mold additionally, thereby reducing the production cost.

In one embodiment, the switching portion 41 is connected to the main frame 111 by a flange bolt connection structure, and/or the connecting portion 42 is connected to the switching portion 41 by a flange bolt connection structure. It should be noted that the flange bolt connection structure belongs to a conventional connection structure, which is not repeated in this embodiment. This embodiment includes three technical solutions, namely, "the switching portion 41 is connected to the main frame 111 by a flange bolt connection structure", "the connecting portion 42 is connected to the switching portion 41 by a flange bolt connection structure", "the switching portion 41 is connected to the main frame 111 by a flange bolt connection structure, and the connecting portion 42 is connected to the switching portion 41 by a flange bolt connection structure".

In one embodiment, the switching portion 41 is connected to the main frame 111 by a plug-in bolt connection structure, and/or the connecting portion 42 is connected to the switching portion 41 by a plug-in bolt connection structure. It should be noted that the plug-in bolt connection structure belongs to a conventional connection structure, which is not repeated in this embodiment. This embodiment includes three technical solutions, namely, "the switching portion 41 is connected to the main frame 111 by a plug-in bolt connection structure", "the connecting portion 42 is connected to the switching portion 41 by a plug-in bolt connection structure", "the switching portion 41 is connected to the main frame 111 by a plug-in bolt connection structure, and the connecting portion 42 is connected to the switching portion 41 by a plug-in bolt connection structure".

In another embodiment, the switching portion 41 is connected to the main frame 111 by a flange bolt connection structure, and the connecting portion 42 is connected to the switching portion 41 by a plug-in bolt connection structure.

In one embodiment, a positioning structure 5 is provided between the main frame 111 and the switching portion 41, and/or between the switching portion 41 and the connecting portion 42, so as to position the switching portion 41 to the main frame 111 and position the connecting portion 42 to the switching portion 41.

It should be noted that this embodiment includes three technical solutions, namely, "a positioning structure 5 is provided between the main frame 111 and the switching portion 41", "a positioning structure 5 is provided between the switching portion 41 and the connecting portion 42", and "a positioning structure 5 is provided between the main frame 111 and the switching portion 41, and between the switching portion 41 and the connecting portion 42". There are many specific forms of the positioning structure 5, as long as the main frame 111 and the switching portion 41 can be positioned in the third direction, or the switching portion 41 and the connecting portion 42 can be positioned in the third direction, which will not be limited in this embodiment.

According to the above technical solution, during the process of hoisting the box transformer structure 2 or installing the switching portion 41, the box transformer structure 2 or the switching portion 41 can be arranged correctly along the third direction by the positioning structure 5, so as to prevent the box transformer structure 2 or the switching portion 41 from shaking during the installation of the connection structure, thereby avoiding injuries to personnel or installation failure.

As shown in FIG. 4, in one embodiment, the positioning structure 5 includes a positioning protrusion 51, which is provided at the main frame 111, and is correspondingly abutted against the bottom of the switching portion 41 in the third direction.

It should be noted that the positioning protrusion 51 is relative. For example, a groove can be machined at the flat connecting portion 42 between the main frame 111 and the switching portion 41. The unmachined area relative to the groove can be defined as the positioning protrusion 51. The positioning protrusion 51 can also be welded at the flat connecting portion 42. According to the above technical solution, the switching portion 41 can be supported by the positioning protrusion 51, and the weight of the switching portion 41 can be shared, thereby reducing the pressure of the crane during the hoisting process.

In another embodiment, the positioning structure 5 includes a positioning protrusion 51, which is formed at the switching portion 41 and is correspondingly abutted against the bottom of the connecting portion 42 in the third direction. The technical effect of this embodiment is the same as that of the above embodiment, so it is not repeated here.

In one embodiment, a matching slot is provided at the switching portion 41 corresponding to the connecting portion 42, the positioning structure 5 includes a positioning pin extending along the second direction, and the positioning pin is provided at the connecting portion 42 to be correspondingly plugged into the matching slot at the switching portion 41.

It should be noted that the plugging of the positioning pin and the matching slot can not only limit the movement in the third direction, but also limit the movement in the first direction, and the multiple groups of positioning pins and matching slots can also limit the rotation of the axis along the second direction. According to the above technical solution, the connecting portion 42 can be stably positioned at the switching portion 41 through the positioning plugging between the positioning pin and the matching slot, and the switching portion 41 can share the weight of the box transformer bracket 22, thereby reducing the pressure of the crane during the hoisting process.

In another embodiment, the main frame 111 is provided with a matching slot corresponding to the switching portion 41. The positioning structure 5 includes a positioning pin extending in the second direction, and the positioning pin is provided at the switching portion 41 to be correspondingly plugged into the matching slot of the main frame 111. The technical effect of this embodiment is the same as that of the above embodiment, so it is not repeated.

In one embodiment, the main body frame 11 includes a main frame 111 and a rear bottom frame 112. The main frame 111 is used for installing the rotor of the wind turbine generator set, and the rear bottom frame 112 is used for installing the main control cabinet. Two ends of the box transformer bracket 22 in the first direction are respectively connected to the main frame 111 and the rear bottom frame 112. It should be noted that the main frame 111 can not only be used for installing the rotor, but also be directly installed at the wind turbine tower.

Further, as shown in FIG. 2, in one embodiment, the box transformer bracket 22 includes a bearing crossbeam 221 and two connecting longitudinal beams 222. The bearing crossbeam 221 extends along the first direction to form a first end and a second end. The two connecting longitudinal beams 222 extend along the second direction to respectively connect the first end and the second end of the bearing crossbeam 221 to the main frame 111. The box transformer unit 21 is provided at the bearing crossbeam 221.

It should be noted that, since the size of the cabin body 1 in the first direction is generally larger, the box transformer bracket 22 can provide an enlarged installation space through the bearing crossbeam 221 extending along the first direction to support the box transformer unit 21 of larger size, thereby adapting to the power transformation requirements of the large-megawatt wind turbine generator set, and the two connecting longitudinal beams 222 extending along the second direction can support both ends of the bearing crossbeam 221, ensuring that the overall center of gravity of the box transformer unit 21 is located between two connecting longitudinal beams 222, thereby improving the stability of the box transformer structure 2.

In order to meet the lightweight requirements of the box transformer structure 2, the bearing crossbeam 221 is generally narrower, and there are fewer positions that can be used to connect the box transformer unit 21, so it is difficult to ensure the connection stability between the box transformer unit 21 and the bearing crossbeam 221. In view of this, in one embodiment, a plurality of installation portions 2211 are respectively provided on both sides of the bearing crossbeam 221 in the second direction, and the plurality of installation portions 2211 on the same side are arranged at intervals in the first direction. The box transformer unit 21 is connected to the plurality of installation portions 2211.

It should be noted that since the bearing crossbeam 221 extends along the first direction, the two sides in the second direction are also the two sides in the width direction or the two sides in the thickness direction.

According to the above technical solution, the installation position of the side end of the bearing crossbeam 221 in the second direction is fully utilized, so that multiple installation portions 2211 can be provided, and each installation portion 2211 is used as an independent connection installation point in which the bearing crossbeam 221 is connected to the box transformer unit 21. The multiple installation portions 2211 at both sides of the bearing crossbeam 221 in the second direction can increase the bearing thickness of the bearing crossbeam 221, thereby improving the connection stability between the bearing crossbeam 221 and the box transformer unit 21. In addition, the multiple installation portions 2211 on the same side are provided at intervals in the first direction, so that each point of the box transformer unit 21 in the first direction can be used for installing and supporting, further improving the connection stability between the bearing crossbeam 221 and the box transformer unit 21.

The box transformer base 212 in the box transformer unit 21 is usually formed by casting. In order to ensure the stable connection between the box transformer base 212 and the installation portion 2211, it is necessary to form a corresponding installation surface for each installation portion 2211 at the box transformer base 212. The process of forming multiple installation surfaces is usually complicated. In view of this, as shown in FIG. 2, in one embodiment, multiple installation portions 2211 on different sides are provided in groups of two in an opposite manner.

According to the above technical solution, multiple installation portions 2211 on different sides are provided in groups of two in an opposite manner, so that only one larger installation surface needs to be provided at the box transformer unit 21 corresponding one installation portion 2211. Two installation portions 2211 can be connected to each other through one installation surface, thereby greatly reducing the number of processing times for the installation surface of the box transformer unit 21, namely, reducing the processing complexity of the box transformer unit 21.

Generally speaking, in order to meet the power transformation requirements of large-megawatt wind turbine generator sets, the box transformer unit 21 is generally larger in size, and the weight is correspondingly larger, which also puts forward higher requirements on the overall rigidity of the box transformer bracket 22. In view of this, as shown in FIG. 2, in one embodiment, the box transformer bracket 22 also includes a reinforcing crossbeam 223, and the reinforcing crossbeam 223 is provided opposite to the bearing crossbeam 221 in the second direction. Two ends of the reinforcing crossbeam 223 are respectively provided at two connecting longitudinal beams 222.

According to the above technical solution, the reinforcing crossbeam 223 is provided between the two connecting longitudinal beams 222, which is provided with a reinforcing effect on the overall structure of the bearing crossbeam 221 and the connecting longitudinal beam 222, thereby reducing the fixed connection pressure between the bearing crossbeam 221 and the connecting longitudinal beam 222, improving the overall rigidity of the box transformer bracket 22, and enabling the box transformer bracket 22 to support the heavy box transformer unit 21.

Generally speaking, in order to meet the power transformation requirements of large-megawatt wind turbine generator sets, the box transformer unit 21 is generally larger in size, and its weight is correspondingly larger, which also puts forward higher requirements on the connection strength between the box transformer bracket 22 and the main frame 111. In view of this, as shown in FIG. 3, in one embodiment, the connecting longitudinal beam 222 is provided with a first connecting section 2221 connected to the bearing crossbeam 221, and a second connecting section 2222 connected to the main frame 111. The cross-sectional area of the second connecting section 2222 in the second direction is greater than that of the first connecting section 2221.

According to the above technical solution, since the second connecting section 2222 of the connecting longitudinal beam 222 is connected to the main frame 111, and the cross-sectional area of the second connecting section 2222 is larger than the cross-sectional area of the first connecting section 2221, the connecting longitudinal beam 222 can obtain a larger connection area through the second connecting section 2222, thereby enhancing the connection strength between the connecting longitudinal beam 222 and the main frame 111, and effectively preventing the connecting longitudinal beam 222 from loosening.

In one embodiment, the size of the second connecting section 2222 in the third direction is larger than that of the first connecting section 2221.

It should be noted that the third direction is usually set as a vertical direction perpendicular to the first direction, which can be understood as the direction of gravity, and the function of the box transformer bracket 22 is to overcome gravity to support the box transformer unit 21. Therefore, the connection between the second connecting section 2222 of the connecting longitudinal beam 222 and the main frame 111 needs to overcome the bending moment in the direction of gravity. According to the above technical solution, by setting the size of the second connecting section 2222 in the third direction to be larger than that of the first connecting section 2221, the second connecting section 2222 is provided with a sufficient connection size in the third direction, so as to overcome the bending moment in the third direction applied by the box transformer unit 21, thereby enhancing the connection strength.

Generally speaking, the box transformer bracket 22 not only plays a load-bearing and supporting role, but also needs to meet the lightweight requirements. In view of this, in one embodiment, the box transformer bracket 22 includes multiple I-beams, and the multiple I-beams include a bearing crossbeam 221 and two connecting longitudinal beams 222. The box transformer bracket 22 is composed of multiple I-beams, to obtain a greater support strength and achieve the lowest weight, which can meet the lightweight requirements.

In other embodiments, the box transformer bracket 22 can also include multiple box beams, and the multiple box beams include a bearing crossbeam 221 and two connecting longitudinal beams 222. In this way, the technical requirements for the box transformer bracket 22 can be met.

As shown in FIG. 1, in one embodiment, two box transformer structures 2 are provided, and the box transformer brackets 22 of the two box transformer structures 2 are respectively installed at two side ends of the main frame 111.

It should be understood that only providing a single box transformer structure 2 may cause the center of gravity of the cabin structure 100 in the second direction to shift toward the box transformer structure 2. According to the above technical solution, two box transformer structures 2 are provided, and the two box transformer brackets 22 are respectively installed at two side ends of the main frame 111, that is, two side ends in the second direction, which can play a balancing role and prevent the center of gravity of the cabin structure 100 from shifting. In addition, the box transformer brackets 22 of the box transformer structure 2 are provided on both sides of the main frame 111, so that the the box transformer structure 2 and the main frame 111 can be installed on the ground first during the hoisting process of the cabin structure 100 in the wind farm, and then can be hoisted as a whole, which improves the work efficiency.

As shown in FIG. 1, in one embodiment, the cabin body 1 includes a cabin housing 12, which is configured to cover the periphery of the main body frame 11. The box transformer structure 2 also includes a box transformer housing 23, which is configured to cover the periphery of the box transformer bracket 22 and is connected to the cabin housing 12.

It should be noted that there is usually a connection between the cabin housing 12 and the main body frame 11, so the cabin housing 12 can serve as the installation base of the box transformer housing 23. Of course, the box transformer housing 23 can also be installed at the box transformer bracket 22, which is not limited in this embodiment.

According to the above technical solution, by providing the cabin housing 12 and the box transformer housing 23, the electrical components installed in the cabin body 1 and the transformer structure 2 can be prevented from being adversely affected by rain or sunlight, thereby improving the protection performance of the cabin structure 100. In addition, the cabin housing 12 can also serve as the installation base of the box transformer housing 23, thereby ensuring the stability of the installation of the box transformer housing 23.

Generally speaking, the box transformer housing 23 is thin and can only serve as a wind and rain shelter. Therefore, the strength is also low. If the box transformer housing 23 is only connected to the cabin housing 12, the box transformer housing 23 may be deformed under strong wind. In view of this, in one embodiment, the box transformer bracket 22 is connected to the inner wall of the box transformer housing 23 through the bearing assembly 3.

It should be noted that the function of the bearing assembly 3 is to connect the box transformer bracket 22 and the box transformer housing 23. There are many specific structural forms and many possible installation locations, which are not limited in this embodiment.

According to the above technical solution, by providing the bearing assembly 3, the box transformer housing 23 can be placed on the box transformer bracket 22, which adds a connection point between the box transformer housing 23 and the box transformer bracket 22, thereby supporting the box transformer bracket 22 from the inside of the box transformer housing 23, and greatly reducing the deformation probability of the box transformer housing 23 due to wind.

Further, as shown in FIG. 5, in one embodiment, a plurality of bearing assemblies 3 are provided, and the plurality of bearing assemblies 3 are provided on both sides of the box transformer bracket 22 in the first direction and are provided at intervals in the third direction.

It should be noted that at least two bearing assemblies 3 are provided in this embodiment, and the two bearing assemblies 3 are respectively located at a high position on one side of the box transformer bracket 22 in the first direction and at a low position on the other side of the box transformer bracket 22 in the first direction. The high position and the low position are both defined with reference to the third direction, and the third direction is usually set as a vertical direction perpendicular to the first direction.

According to the above technical solution, multiple bearing assemblies 3 are provided in this way, so that the box transformer housing 23 can be supported at various positions inside the box transformer housing 23, thereby enhancing the supporting effect of the box transformer housing 23, and the wind resistance of the box transformer housing 23 is further improved.

Further, as shown in FIG. 5, in another embodiment, the bearing assembly 3 includes a bearing portion 31 and a placement portion 32. The bearing portion 31 is provided at the box transformer bracket 22, and the placement portion 32 is provided at the inner wall of the box transformer housing 23. The bearing portion 31 is provided to support the placement portion 32 in the third direction.

It should be noted that the bearing portion 31 and the placement portion 32 are provided to abut against each other, the bearing portion 31 is provided at the box transformer bracket 22, and the placement portion 32 is provided at the box transformer housing 23. The bearing portion 31 can at least support the placement portion 32 in the third direction, and the bearing portion 31 is at least located below the placement portion 32 in the vertical direction. There are many specific structures of the bearing portion 31 and the placement portion 32, which are not limited in this embodiment.

According to the above technical solution, the weight of the box transformer housing 23 can be transferred to the box transformer bracket 22 by the bearing portion 31 supporting the placement portion 32, thereby reducing the connection pressure between the box transformer housing 23 and the cabin housing 12.

In the power transformation process of the box transformer unit 21, heat is inevitably generated. Since the box transformer unit 21 is covered by the box transformer housing 23, the continuously accumulated heat is difficult to be diffused outward, which may affect the power transformation efficiency and service life of the box transformer unit 21. In view of this, as shown in FIG. 5, in another embodiment, the bottom of the box transformer housing 23 is provided with a heat dissipation window 232 that communicates with the external environment in the third direction. Through providing the heat dissipation window 232, the box transformer housing 23 can communicate with the outside atmosphere, the heat generated by the box transformer unit 21 can be promptly diffused outward through the heat dissipation window 232, thereby avoiding the accumulation of heat and ensuring the working efficiency and service life of the box transformer unit 21.

Further, as shown in FIG. 5, in one embodiment, the box transformer unit 21 includes a plurality of transformers 211, and the plurality of transformers 211 are provided along the first direction. There are a plurality of heat dissipation windows 232 corresponding to the transformers 211 in the first direction.

It should be noted that the number of heat dissipation windows 232 can be equal to the number of transformers 211, that is, the heat dissipation window 232 corresponds to the transformer 211 one by one, or one heat dissipation window 232 is provided between two adjacent transformers 211.

According to the above technical solution, since multiple transformers 211 are provided in the first direction, the heat generated by one or more corresponding transformers 211 can be diffused outward in time through multiple heat dissipation windows 232 provided in the first direction, thereby reducing the heat diffusion path and improving the heat dissipation efficiency.

In view of the large size of the box transformer unit 21 of the large-megawatt wind turbine generator set, the size of the box transformer housing 23 is larger, and the box transformer housing 23 is usually a thin-walled structure, which undoubtedly increases the difficulty of integrally forming the box transformer housing 23. In view of this, in one embodiment, the box transformer housing 23 is formed by splicing multiple partial housings 231.

It should be noted that the multiple partial housings 231 can be connected by riveting, welding, or screwing, and the splicing method will not be limited in the present application.

According to the above technical solution, the box transformer housing 23 is formed by splicing a plurality of partial housings 231, and the single partial housing 231 can be designed and manufactured. The size of the partial housing 231 can be determined according to the actual production and manufacturing capacity, which can significantly reduce the difficulty of forming the box transformer housing 23.

In one embodiment, two box transformer units 21 are provided along the first direction, which makes the box transformer bracket 22 have a larger span in the first direction. The larger span makes the box transformer bracket 22 bear a larger bending moment, and deformation is prone to occur in the box transformer bracket 22. In view of this, in one embodiment, the box transformer bracket 22 is connected to the main frame 111 through the switching assembly 4. In the first direction, three switching assemblies 4 are provided at intervals, and the box transformer unit 21 is located between two adjacent switching assemblies 4.

It should be noted that the function of the switching assembly 4 is to convert the connection, which means to connect the box transformer to the main frame 111. There are many specific structural forms, which are not limited in this embodiment.

According to the above technical solution, three switching assemblies 4 are provided at intervals in the first direction, and the box transformer unit 21 is located between two adjacent switching assemblies 4, so that each box transformer unit 21 is provided with two sets of corresponding switching assemblies 4, and the middle switching assembly 4 can perform switching and supporting on the middle part of the box transformer bracket 22, thereby reducing the bending moment borne by the box transformer bracket 22 and improving the support stability of the box transformer bracket 22.

In one embodiment, the box transformer bracket 22 is formed with a plurality of installation portions 2211 corresponding to the box transformer unit 21. The box transformer unit 21 includes a box transformer base 212 and a plurality of transformers 211, the plurality of transformers 211 are provided at the box transformer base 212 in the first direction, and the box transformer base 212 is connected to the plurality of installation portions 2211.

According to the above technical solution, through the combination of the plurality of transformers 211, the power transformation capacity of the box transformer unit 21 can meet the power transformation requirement of the large-megawatt wind turbine generator set. In addition, the structure is more compact, the box transformer base 212 can provide the unified installation of a plurality of transformers 211, and the box transformer base 212 can be connected through multiple installation portions 2211, thereby improving the connection stability between the box transformer unit 21 and the box transformer bracket 22.

Multiple transformers 211 are usually provided vertically along the third direction, so that the box transformer unit 21 forms a certain height in the third direction. The box transformer unit 21 may be overturned as a whole if it is connected only by the box transformer base 212 and the box transformer bracket 22. In view of this, as shown in FIG. 2, FIG. 4 and FIG. 5, in one embodiment, the box transformer unit 21 also includes a box transformer top cover 213 and multiple tensioning structures 24. The box transformer top cover 213 is connected to the multiple transformers 211 and covers the multiple transformers 211. The multiple tensioning structures 24 are provided at the peripheral side of the box transformer bracket 22 to tighten the box transformer top cover 213 and the box transformer bracket 22.

It should be noted that the tensioning structure 24 is used to tension the transformer top cover 213 and the transformer bracket 22. There are many specific structures. For example, the tensioning structure 24 can be in the form of a cable, which connects the box transformer top cover 213 and the transformer bracket 22 by traction. The specific form is not limited in this embodiment.

According to the above technical solution, multiple tensioning structures 24 are provided at the peripheral side of the transformer bracket 22, and the transformer bracket 22 is tensioned from all directions. In this way, when the box transformer unit 21 has a tendency to tip over in any direction, there is always a corresponding tensioning structure 24 to apply a tensioning force in the opposite direction to the box transformer unit 21, thereby reducing the probability of the box transformer unit 21 tipping over.

Further, in one embodiment, the box transformer top cover 213 is provided with four top corners at the peripheral side of the box transformer top cover 213. Four tensioning structures 24 are respectively provided corresponding to the four top corners. It should be noted that, in this embodiment, the tensioning directions of the four tensioning structures 24 are different.

According to the above technical solution, the four top corners of the box transformer top cover 213 are tensioned, and the tensioning effect that meets the design requirements can be achieved with the least number of tensioning structures 24, which greatly reduces the setting cost of the tensioning structure 24.

In one embodiment, the box transformer bracket 22 includes two tensioning brackets 224, which are respectively provided at both sides of the box transformer top cover 213 along the first direction and extend close to the box transformer top cover 213. Four tensioning structures 24 are respectively installed at the two tensioning brackets 224 in groups of two.

According to the above technical solution, the tensioning bracket 224 extends toward the third direction and can reach the side of the box transformer top cover 213. The tensioning bracket 224 is close to the box transformer top cover 213. The tensioning structure 24 provided between the tensioning bracket 224 and the box transformer top cover 213 can greatly shorten the extension length of the tensioning structure 24. The four tensioning structures 24 can make full use of the two tensioning brackets 224 as the tensioning connection basis, thereby improving the overall compactness of the box transformer structure 2.

In one embodiment, the tensioning structure 24 is provided with two tensioning portions 241. The two tensioning portions 241 are respectively connected to the box transformer top cover 213 and the box transformer bracket 22, and the distance between the two tensioning portions 241 is adjustable.

It should be noted that there are many ways to adjust the distance between the two tensioning portions 241, such as using a telescopic cylinder. The cylinder rod forms a tensioning portion 241 and the cylinder seat forms another tensioning portion 241, and the distance between the two tensioning portions 241 can be adjusted by ventilation and exhaust, which is not limited in this embodiment.

According to the above technical solution, the distance between the two tensioning portions 241 is adjustable, so that the tensioning structure 24 can adjust the distance between the two tensioning portions 241 according to the box transformer top cover 213 of different sizes, thereby improving the scope of application of the tensioning structure 24.

Further, in one embodiment, the tensioning structure 24 includes a turnbuckle bolt 24a, and two hook ropes of the turnbuckle bolt 24a include two tensioning portions 241. It should be noted that the turnbuckle bolt 24a is a standard part, which can be purchased according to the actual tension requirements, thereby saving the design and manufacturing costs. The turnbuckle bolt 24a is provided with a high connection strength and is relatively convenient to use, which can meet the tensioning and adjustment requirements for the box transformer top cover 213 and the box transformer bracket 22 in the embodiment of the present application.

Further, in another embodiment, the two tensioning portions 241 include a top cover tensioning portion and a bracket tensioning portion. The top cover tensioning portion is provided at the box transformer top cover 213, and the bracket tensioning portion is provided at the box transformer bracket 22. The top cover tensioning portion is provided away from the box transformer base 212 in a third direction relative to the bracket tensioning portion. In this way, the tensioning force of the tensioning structure 24 is inclined in the direction from the box transformer top cover 213 to the box transformer base 212, and the tensioning structure 24 can apply a compressive component force to the box transformer top cover 213 toward the box transformer base 212, so that the multiple transformers 211 between the box transformer top cover 213 and the box transformer base 212 can be pressed and fastened, thereby improving the structural stability of the box transformer unit 21.

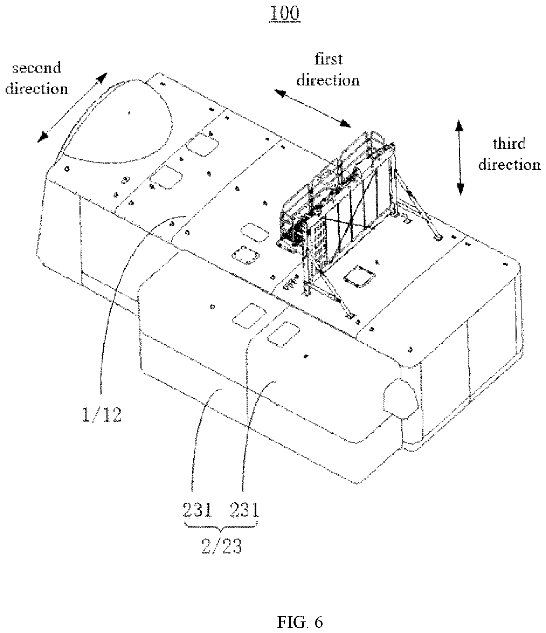

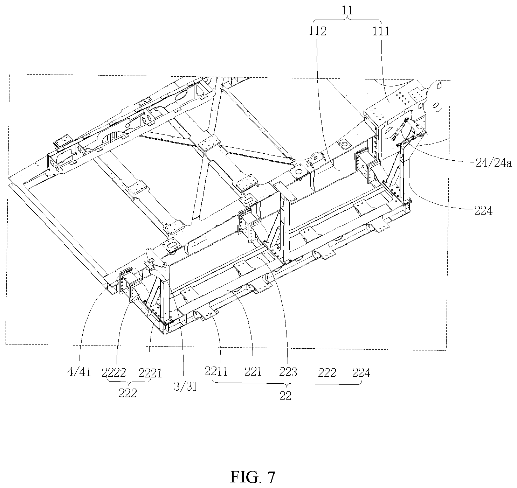

In addition, in another embodiment, as shown in FIG. 6 and FIG. 7, the present application provides a cabin structure 100 applied to a wind turbine generator set. The cabin structure 100 includes a cabin body 1 and a box transformer structure 2. The cabin body 1 extends along a first direction and is provided with a main body frame 11. The box transformer structure 2 includes two box transformer units 21 and a box transformer bracket 22. The box transformer bracket 22 is provided at the main body frame 11 and is located at a side end of the cabin body 1 in a second direction, and the two box transformer units 21 are provided at the box transformer bracket 22 along a first direction, and are at least used for voltage conversion.

It should be noted that the cabin body 1 extends along the first direction. One end of the cabin body 1 is usually used for installation of the rotor and is connected to the wind turbine tower. The other end of the cabin body 1 is usually used for installation of structures such as the main control cabinet. The box transformer structure 2 is at least used to transform the voltage, and the electric energy generated by the rotor of the wind turbine generator set can be transmitted to the box transformer structure 2 through cables, so that its voltage is transformed to be suitable for transmission. Not limited to this, the box transformer structure 2 can also have the function of current limiting, and the like. The specific function of the box transformer structure 2 is not limited in this embodiment. In the embodiment of the present application, in view of the setting scene of the cabin body 1, the first direction is usually defined as a horizontal direction, and the second direction is usually defined as another horizontal direction perpendicular to the first direction. The number of the box transformer structure 2 can be only one, or both sides of the main body frame 11 in the second direction can be provided with one box transformer structure 2.

Since two box transformer units 21 are provided along the first direction, the span of box transformer bracket 22 in the first direction is larger. The larger span causes box transformer bracket 22 to bear a larger bending moment, and deformation is prone to occur in the box transformer bracket 22. In view of this, as shown in FIG. 7, in one embodiment, box transformer bracket 22 is connected to the main body frame 11 by a switching assembly. In the first direction, three switching assemblies 4 are provided at intervals, and the box transformer unit 21 is located between two adjacent switching assemblies 4.

It should be noted that the switching assembly is used to convert the connection, so as to connect the box transformer to the main body frame 11, and there are many specific structural forms, which are not limited in this embodiment.

In one embodiment, the main body frame 11 includes a main frame 111 and a rear bottom frame 112, the main frame 111. The main frame 111 is used for installing the rotor of the wind turbine generator set, and the rear bottom frame 112 is used for installing the main control cabinet. The box transformer bracket 22 can be installed at one of the main frame 111 and the rear bottom frame 112, or can be installed at both the main frame 111 and the rear bottom frame 112. It should be noted that the main frame 111 can not only be used for installing the rotor, but also be directly installed at the wind turbine tower.

Further, as shown in FIG. 7, in one embodiment, the box transformer bracket 22 includes a bearing crossbeam 221 and two connecting longitudinal beams 222. The bearing crossbeam 221 extends along the first direction to form a first end corresponding to the main frame 111 and a second end corresponding to the rear bottom frame 112. The two connecting longitudinal beams 222 extend along the second direction to respectively connect the first end of the bearing crossbeam 221 to the main frame 111, and connect the second end of the bearing crossbeam 221 to the rear bottom frame 112. The box transformer unit 21 is provided at the bearing crossbeam 221.

In one embodiment, the cabin body 1 includes a cabin housing 12, and the cabin housing 12 is configured to cover the periphery of the main body frame 11. The side end of the main body frame 11 extends out of the switching portion 41 provided at the cabin housing 12. The box transformer bracket 22 is provided with a connecting portion 42, and the connecting portion 42 is detachably provided at the switching portion 41.

As shown in FIG. 7, in one embodiment, the switching portion 41 and the connecting portion 42 correspond to each other to form the switching assembly 4. Two switching assemblies 4 are provided, and are respectively provided at both ends of the box transformer bracket 22 in the first direction.

It should be noted that the main body frame 11 and the switching portion 41 can be integrally formed, but there is no position in the existing mold of the main body frame 11 designed for the switching portion 41, so the existing mold for the main body frame 11 cannot continue to complete the production and manufacturing the integral portion of the main body frame 11 and the switching portion 41, and a new mold needs to be developed, which will undoubtedly cause an increase in production costs and waste of molds. In view of this, in one embodiment, the switching portion 41 is detachably connected to the main body frame 11.

According to the above technical solution, the switching portion 41 is detachably connected to the main body frame 11, so that the main body frame 11 and the switching portion 41 can be manufactured separately, and the production of the main body frame 11 can be completed by the existing mold for the main body frame 11, without developing a new mold additionally, thereby reducing the production and manufacturing cost.

As shown in FIG. 3, in one embodiment, the switching portion 41 is connected to the main body frame 11 by a flange bolt connection structure, and/or the connecting portion 42 is connected to the switching portion 41 by a flange bolt connection structure. It should be noted that the flange bolt connection structure belongs to a conventional connection structure, which is not repeated in this embodiment. This embodiment includes three technical solutions, namely, "the switching portion 41 is connected to the main body frame 11 by a flange bolt connection structure", "the connecting portion 42 is connected to the switching portion 41 by a flange bolt connection structure", "the switching portion 41 is connected to the main body frame 11 by a flange bolt connection structure, and the connecting portion 42 is connected to the switching portion 41 by a flange bolt connection structure".

In one embodiment, the switching portion 41 is connected to the main body frame 11 by a plug-in bolt connection structure, and/or the connecting portion 42 is connected to the switching portion 41 by a plug-in bolt connection structure. It should be noted that the plug-in bolt connection structure belongs to a conventional connection structure, which is not repeated in this embodiment. This embodiment includes three technical solutions, namely, "the switching portion 41 is connected to the main body frame 11 by a plug-in bolt connection structure", "the connecting portion 42 is connected to the switching portion 41 by a plug-in bolt connection structure", "the switching portion 41 is connected to the main body frame 11 by a plug-in bolt connection structure, and the connecting portion 42 is connected to the switching portion 41 by a plug-in bolt connection structure".

In another embodiment, the switching portion 41 is connected to the main body frame 11 by a flange bolt connection structure, and the connecting portion 42 is connected to the switching portion 41 by a plug-in bolt connection structure.

In one embodiment, a positioning structure 5 is provided between the main body frame 11 and the switching portion 41, and/or between the switching portion 41 and the connecting portion 42, so as to position the switching portion 41 to the main body frame 11 and position the connecting portion 42 to the switching portion 41.

It should be noted that this embodiment includes three technical solutions, namely, "a positioning structure 5 is provided between the main body frame 11 and the switching portion 41", "a positioning structure 5 is provided between the switching portion 41 and the connecting portion 42", and "a positioning structure 5 is provided between the main body frame 11 and the switching portion 41, and between the switching portion 41 and the connecting portion 42". There are many specific forms of the positioning structure 5, as long as the main body frame 11 and the switching portion 41 can be positioned in the third direction, or the switching portion 41 and the connecting portion 42 can be positioned in the third direction, which will not be limited in this embodiment.

In another embodiment, the main body frame 11 is provided with a matching slot corresponding to the switching portion 41. The positioning structure 5 includes a positioning pin extending in the second direction, and the positioning pin is provided at the switching portion 41 to be correspondingly plugged into the matching slot of the main body frame 11. The technical effect of this embodiment is the same as that of the above embodiment, so it is not repeated.

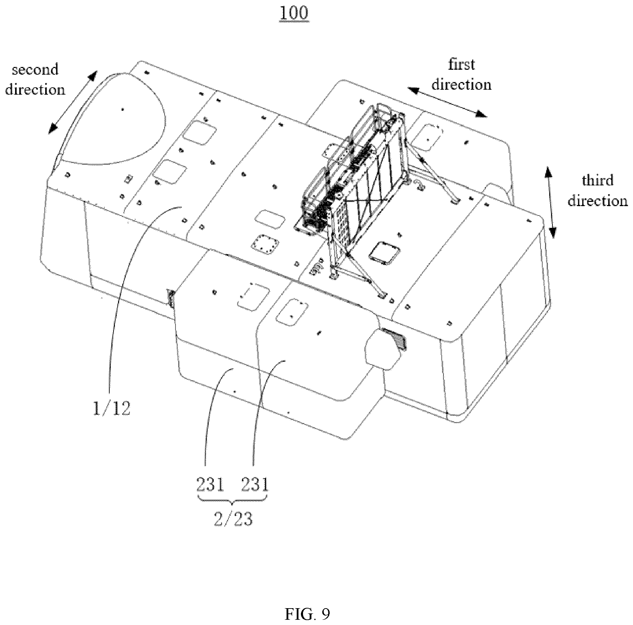

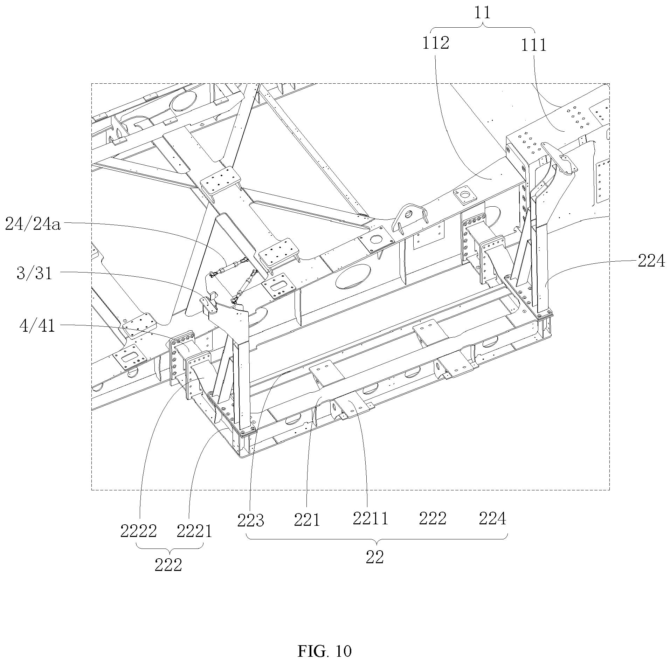

In addition, in another embodiment, as shown in FIG. 9 and FIG. 10, the present application proposes a cabin structure 100 applied to a wind turbine generator set. The cabin structure 100 includes a cabin body 1 and a box transformer structure 2. The cabin body 1 extends along a first direction, and the cabin body 1 is provided with a main body frame 11. The main body frame 11 includes a rear bottom frame 112, and the rear bottom frame 112 is used for installing a main control cabinet. The box transformer structure 2 includes a box transformer unit 21 and a box transformer bracket 22. The box transformer bracket 22 is provided at the rear bottom frame 112 and is located at the side end of the cabin body 1 in the second direction. The box transformer unit 21 is provided at the box transformer bracket 22, and is used at least for voltage conversion.

It should be noted that the cabin body 1 extends along the first direction. One end of the cabin body 1 is usually used for installation of the rotor and is connected to the wind turbine tower. The other end of the cabin body 1 is the rear bottom frame 112, which is usually used for the installation of structures such as the main control cabinet. The box transformer structure 2 is at least used to transform the voltage, and the electric energy generated by the rotor of the wind turbine generator set can be transmitted to the box transformer structure 2 through the cable, so that the voltage is transformed to be suitable for transmission. Not limited to this, the box transformer structure 2 can also have the function of current limiting, and the like, and the specific function of the box transformer structure 2 is not further limited in this embodiment. In the embodiment of the present application, in view of the setting scene of the cabin body 1, the first direction is usually defined as a horizontal direction, and the second direction is usually defined as another horizontal direction perpendicular to the first direction. The number of the box transformer structure 2 can be only one, or both sides of the rear bottom frame 112 in the second direction can be provided with one box transformer structure 2.

In one embodiment, two box transformer structures 2 are provided, and the box transformer brackets 22 of the two box transformer structures 2 are respectively installed at two side ends of the rear bottom frame 112.

It should be understood that only providing a single box transformer structure 2 may cause the center of gravity of the cabin structure 100 in the second direction to shift toward the box transformer structure 2. According to the above technical solution, two box transformer structures 2 are provided, and the two box transformer brackets 22 are respectively installed at two side ends of the rear bottom frame 112, that is, the side ends of the rear bottom frame 112 in the second direction, which can play a balancing role and prevent the center of gravity of the cabin structure 100 from shifting. In addition, the box transformer brackets 22 of the box transformer structure 2 are provided on both sides of the rear bottom frame 112, so that the box transformer structure 2 and the rear bottom frame 112 can be installed on the ground during the hoisting process of the cabin structure 100 in the wind farm, and then can be hoisted as a whole, which improves the work efficiency.

In one embodiment, the main body frame 11 includes a main frame 111 and a rear bottom frame 112. The main frame 111 is used for installing the rotor of the wind turbine generator set, and the rear bottom frame 112 is used for installing the main control cabinet. Two ends of the box transformer bracket 22 in the first direction are installed at the rear bottom frame 112. It should be noted that the main frame 111 can not only be used for installing the rotor, but also be directly installed to the wind turbine tower.

Generally speaking, in order to meet the power transformation requirements of large-megawatt wind turbine generator sets, the box transformer unit 21 is generally larger in size, and its weight is correspondingly larger, which also puts forward higher requirements on the connection strength between the box transformer bracket 22 and the rear bottom frame 112. In view of this, as shown in FIG. 10, in one embodiment, the connecting longitudinal beam 222 is provided with a first connecting section 2221 connected to the bearing crossbeam 221, and a second connecting section 2222 connected to the rear bottom frame 112. The cross-sectional area of the second connecting section 2222 in the second direction is greater than that of the first connecting section 2221.

According to the above technical solution, the second connecting section 2222 of the connecting longitudinal beam 222 is connected to the rear bottom frame 112, and the cross-sectional area of the second connecting section 2222 is larger than the cross-sectional area of the first connecting section 2221, so that the connecting longitudinal beam 222 can obtain a larger connection area through the second connecting section 2222, thereby enhancing the connection strength between the connecting longitudinal beam 222 and the rear bottom frame 112, and effectively preventing the connecting longitudinal beam 222 from loosening.

In one embodiment, the cabin body 1 includes a cabin housing 12, which is configured to cover the periphery of the main body frame 11. The side end of the rear bottom frame 112 extends out of the switching portion 41 provided at the cabin housing 12. The box transformer bracket 22 is provided with a connecting portion 42, which is detachably provided at the switching portion 41.

It should be noted that, by providing the cabin housing 12, the electrical components installed in the cabin body 1 can be prevented from adverse effects caused by rain or sunlight. Since the cabin housing 12 covers the main body frame 11, the cabin housing 12 will interfere with the connection between the box transformer bracket 22 and the rear bottom frame 112. There are many detachable ways, which will not be limited in this embodiment.

According to the above technical solution, due to the detachable connection between the switching portion 41 and the connecting portion 42, the box transformer structure 2 and the rear bottom frame 112 can be assembled by split hoisting or integral hoisting according to the actual situation. For example, when the wind farm crane is large in size, the box transformer structure 2 and the rear bottom frame 112 can be assembled on the ground and then hoisted to the wind turbine tower. When the wind farm crane is small in size, the rear bottom frame 112 can be hoisted to the wind turbine tower first, and then the box transformer structure 2 can be hoisted to the rear bottom frame 112.

By providing the switching portion 41 of the rear bottom frame 112 extending out of the cabin housing 12, during the process of splitting the box transformer structure 2, the connecting portion 42 of the box transformer bracket 22 can be connected to the switching portion 41 outside the cabin housing 12, so as to avoid the connecting portion 42 interfering with the cabin housing 12 and damaging the cabin housing 12.

It should be noted that the rear bottom frame 112 and the switching portion 41 can be integrally formed, but there is no position in the existing mold of the rear bottom frame 112, so the existing mold for the rear bottom frame 112 cannot continue to complete the production and manufacturing the integral portion of the rear bottom frame 112 and the switching portion 41, and a new mold needs to be developed, which will undoubtedly cause an increase in production costs and waste of molds. In view of this, in one embodiment, the switching portion 41 is detachably connected to the rear bottom frame 112.

According to the above technical solution, the switching portion 41 is detachably connected to the rear bottom frame 112, so that the rear bottom frame 112 and the switching portion 41 can be manufactured separately, and the production of the rear bottom frame 112 can be completed by the existing mold for the rear bottom frame 112, without developing a new mold additionally, thereby reducing the production cost.

In one embodiment, the switching portion 41 is connected to the rear bottom frame 112 by a flange bolt connection structure, and/or the connecting portion 42 is connected to the switching portion 41 by a flange bolt connection structure. It should be noted that the flange bolt connection structure belongs to a conventional connection structure, which is not repeated in this embodiment. This embodiment includes three technical solutions, namely, "the switching portion 41 is connected to the rear bottom frame 112 by a flange bolt connection structure", "the connecting portion 42 is connected to the switching portion 41 by a flange bolt connection structure", "the switching portion 41 is connected to the rear bottom frame 112 by a flange bolt connection structure, and the connecting portion 42 is connected to the switching portion 41 by a flange bolt connection structure".

In one embodiment, the switching portion 41 is connected to the rear bottom frame 112 by a plug-in bolt connection structure, and/or the connecting portion 42 is connected to the switching portion 41 by a plug-in bolt connection structure. It should be noted that the plug-in bolt connection structure belongs to a conventional connection structure, which is not repeated in this embodiment. This embodiment includes three technical solutions, namely, "the switching portion 41 is connected to the rear bottom frame 112 by a plug-in bolt connection structure", "the connecting portion 42 is connected to the switching portion 41 by a plug-in bolt connection structure", "the switching portion 41 is connected to the rear bottom frame 112 by a plug-in bolt connection structure, and the connecting portion 42 is connected to the switching portion 41 by a plug-in bolt connection structure".

In another embodiment, the switching portion 41 is connected to the rear bottom frame 112 by a flange bolt connection structure, and the connecting portion 42 is connected to the switching portion 41 by a plug-in bolt connection structure.

In one embodiment, a positioning structure 5 is provided between the rear bottom frame 112 and the switching portion 41, and/or between the switching portion 41 and the connecting portion 42, so as to position the switching portion 41 to the rear bottom frame 112 and position the connecting portion 42 to the switching portion 41.

It should be noted that this embodiment includes three technical solutions, namely, "a positioning structure 5 is provided between the rear bottom frame 112 and the switching portion 41", "a positioning structure 5 is provided between the switching portion 41 and the connecting portion 42", and "a positioning structure 5 is provided between the rear bottom frame 112 and the switching portion 41, and between the switching portion 41 and the connecting portion 42". There are many specific forms of the positioning structure 5, as long as the rear bottom frame 112 and the switching portion 41 can be positioned in the third direction, or the switching portion 41 and the connecting portion 42 can be positioned in the third direction, which will not be limited in this embodiment.

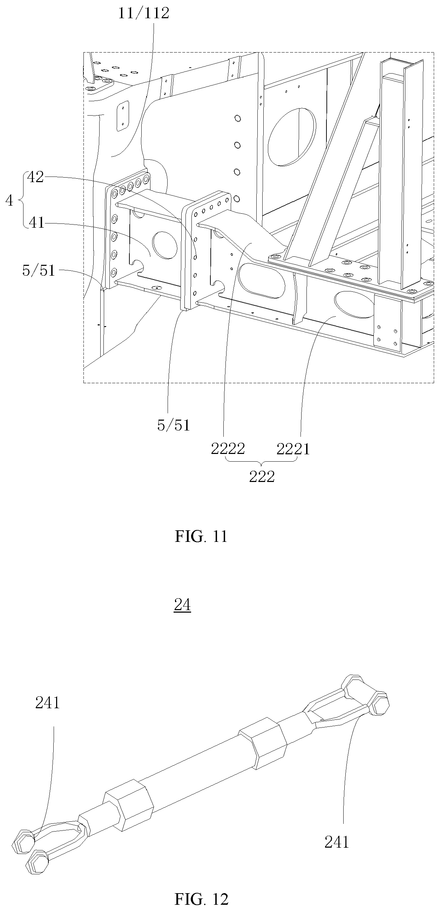

As shown in FIG. 11, in one embodiment, the positioning structure 5 includes a positioning protrusion 51, which is formed at the rear bottom frame 112 and corresponds to the bottom of the switching portion 41 in the third direction.

It should be noted that the positioning protrusion 51 is relative. For example, a groove can be machined at the flat connecting portion 42 at the rear bottom frame 112 or the switching portion 41. The unmachined area relative to the groove can be defined as the positioning protrusion 51. The positioning protrusion 51 can also be welded at the flat connecting portion 42. According to the above technical solution, the switching portion 41 can be supported by the positioning protrusion 51, and the weight of the switching portion 41 can be shared, thereby reducing the pressure of the crane during the hoisting process.

In another embodiment, the rear bottom frame 112 is provided with a matching slot corresponding to the switching portion 41. The positioning structure 5 includes a positioning pin extending along the second direction, and the positioning pin is provided at the switching portion 41 to be correspondingly plugged into the matching slot at the rear bottom frame 112. The technical effect of this embodiment is the same as that of the above embodiment, so it is not repeated.

In one embodiment, two box transformer units 21 are provided along the first direction, which makes the box transformer bracket 22 have a larger span in the first direction. The larger span makes the box transformer bracket 22 bear a larger bending moment, and deformation is prone to occur in the box transformer bracket 22. In view of this, in one embodiment, the box transformer bracket 22 is connected to the rear bottom frame 112 through a switching assembly 4. In the first direction, three switching assemblies 4 are provided at intervals, and the box transformer unit 21 is located between two adjacent switching assemblies 4.

It should be noted that the function of the switching assembly 4 is to convert the connection, to connect the box transformer to the rear bottom frame 112. There are many specific structural forms, which are not limited in this embodiment.

According to the above technical solution, three switching assemblies 4 are provided at intervals in the first direction, and the box transformer unit 21 is located between two adjacent switching assemblies 4, so that each box transformer unit 21 is provided with two sets of switching assemblies 4 corresponding to each box transformer unit 21, and the middle switching assembly 4 can perform switching support on the middle part of the box transformer bracket 22, which reduces the bending moment borne by the box transformer bracket 22 and improves the support stability of the box transformer bracket 22.

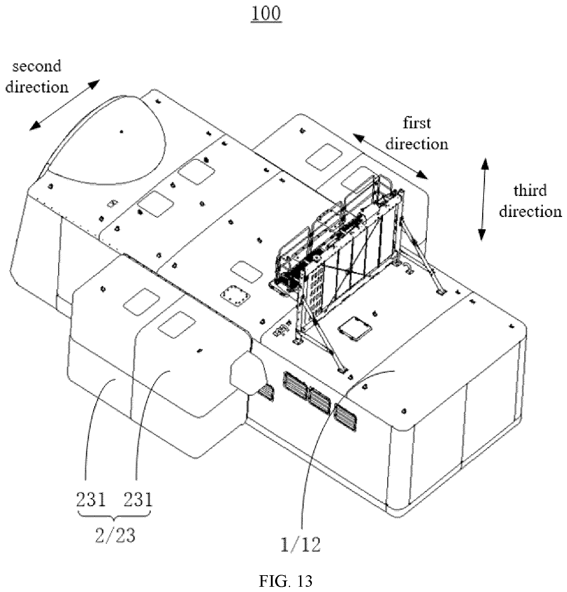

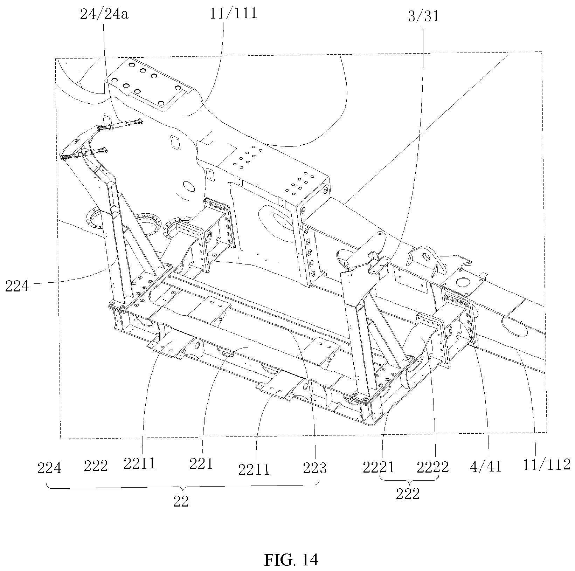

In addition, in another embodiment, as shown in FIG. 13 and FIG. 14, the present application proposes a cabin structure 100 applied to a wind turbine generator set. The cabin structure 100 includes a cabin body 1 and a box transformer structure 2. The cabin body 1 extends along a first direction and is provided with a main body frame 11, and the box transformer structure 2 includes a box transformer unit 21 and a box transformer bracket 22. The box transformer bracket 22 is provided at the main body frame 11 and is located at the side end of the cabin body 1 in the second direction. The box transformer unit 21 is provided at the box transformer bracket 22, and is used at least for voltage conversion.

According to the above technical solution, the main body frame 11 includes a main frame 111 and a rear bottom frame 112 connected to the main frame 111 in the first direction. The main frame 111 and the rear bottom frame 112are usually assembled and connected to each other after being transported to the wind farm. By connecting the two ends of the box transformer bracket 22 in the first direction to the main frame 111 and the rear bottom frame 112 respectively, the connections between the box transformer bracket 22 and the main frame 111 and between the box transformer bracket 22 and the rear bottom frame 112 can be further connected. In this way, stability of the connection between the main frame 111 and the rear bottom frame 112 is enhanced, and the overall strength of the cabin structure 100 is improved.

It should be noted that the third direction is usually defined as a vertical direction perpendicular to the first direction, which can be understood as the gravity direction, and the box transformer bracket 22 is used to overcome the gravity and support the box transformer unit 21. Therefore, the connection between the second connecting section 2222 of the connecting longitudinal beam 222 and the main frame 111 or the rear bottom frame 112 needs to overcome the bending moment along the gravity direction. According to the above technical solution, by setting the size of the second connecting section 2222 in the third direction to be larger than that of the first connecting section 2221, the second connecting section 2222 is provided with a sufficient connection size in the third direction, so as to overcome the bending moment along the third direction applied by the box transformer unit 21, thereby enhancing the connection strength.

In one embodiment, the cabin body 1 includes a cabin housing 12, which is configured to cover the periphery of the main body frame 11. The side end of the main body frame 11 extending out of the switching portion 41 provided at the cabin housing 12. The box transformer bracket 22 is provided with a connecting portion 42, which is detachably provided at the switching portion 41.

It should be noted that the side end of the main body frame 11 extending out of the cabin housing 12 is provided with the switching portion 41. Generally, two switching portions 41 are provided, which are provided at the main frame 111 and the rear bottom frame 112 respectively. The cabin housing 12 can prevent the electrical components installed in the cabin body 1 from being adversely affected by rain or sunlight. Since the cabin housing 12 covers the main body frame 11, the cabin housing 12 will interfere with the connection between the box transformer bracket 22 and the main body frame 11. There are many detachable ways, which will not be limited in this embodiment.

According to the above technical solution, due to the detachable connection between the switching portion 41 and the connecting portion 42, the box transformer structure 2 and the main body frame 11 can be assembled by split hoisting or integral hoisting according to the actual situation. For example, when the wind farm crane is large in size, the box transformer structure 2 and the main body frame 11 can be assembled on the ground and then hoisted to the wind turbine tower. When the wind farm crane is small in size, the main body frame 11 can be hoisted to the wind turbine tower first, and then the box transformer structure 2 can be hoisted to the main body frame 11.

By providing the switching portion 41 of the main body frame 11 extending out of the cabin housing 12, during the process of split hoisting the box transformer structure 2, the connecting portion 42 of the box transformer bracket 22 can be connected to the switching portion 41 outside the cabin housing 12, avoiding the interference between the connecting portion 42 and the cabin housing 12 and damaging the cabin housing 12.

The present application also proposes a wind turbine generator set, which includes a cabin structure 100 of any of the above embodiments. The specific structure of the cabin structure 100 may refer to the above embodiments. Since the wind turbine generator set adopts all the technical solutions of the above embodiments, it at least has all the beneficial effects brought by the technical solutions of the above embodiments, which will not be repeated here.

The above are only some embodiments of the present application, and do not limit the scope of the present application. Under the concept of this application, any equivalent structural transformation made according to the description and drawings of the present application, or direct/indirect application in other related technical fields, shall fall within the claimed scope of the present application.

## Claims

1. A cabin structure, applied to a wind turbine generator set, **characterized by** comprising:
a cabin body (1) extending along a first direction, wherein the cabin body (1) is provided with a main body frame (11); and
a box transformer structure (2) comprising a box transformer unit (21) and a box transformer bracket (22), wherein the box transformer bracket (22) is provided at the main body frame (11) and is provided at a side end of the cabin body (1) in a second direction, and the box transformer unit (21) is provided at the box transformer bracket (22) at least for voltage conversion.

2. The cabin structure according to claim 1, wherein the main body frame (11) comprises a main frame (111), the main frame (111) is configured to install a rotor of the wind turbine generator set, and the box transformer bracket (22) is provided at the main frame (111).

3. The cabin structure according to claim 2, wherein:
the cabin body (1) comprises a cabin housing (12), and the cabin housing (12) is configured to cover a periphery of the main body frame (11);
a side end of the main frame (111) is configured to extend out of a switching portion (41) provided at the cabin housing (12); and
the box transformer bracket (22) is provided with a connecting portion (42), and the connecting portion (42) is detachably provided at the switching portion (41).

4. The cabin structure according to claim 3, wherein the switching portion (41) and the connecting portion (42) correspond one-to-one to form a switching assembly (4), and two switching assemblies (4) are provided at both ends of the box transformer bracket (22) in the first direction.

5. The cabin structure according to claim 1, wherein the box transformer structure (2) comprises two box transformer units (21) and a box transformer bracket (22), the box transformer bracket (22) is provided at the main body frame (11) and is provided at a side end of the cabin body (1) in the second direction, and the two box transformer units (21) are provided at the box transformer bracket (22) along the first direction.

6. The cabin structure according to claim 5, wherein the box transformer bracket (22) is provided with a plurality of installation portions (2211) corresponding to the box transformer unit (21), the box transformer unit (21) comprises a box transformer base (212) and a plurality of transformers (211), the plurality of transformers (211) are provided at the box transformer base (212) in the first direction, and the box transformer base (212) is connected to the plurality of installation portions (2211).

7. The cabin structure according to claim 6, wherein the box transformer unit (21) further comprises:
a box transformer top cover (213) connected to a plurality of transformers (211) and configured to cover the plurality of transformers (211); and
a plurality of tensioning structures (24) provided at a peripheral side of the box transformer bracket (22) to tension and connect the box transformer top cover (213) and the box transformer bracket (22).

8. The cabin structure according to claim 1, wherein the main body frame (11) comprises a rear bottom frame (112), the rear bottom frame (112) is configured to install a main control cabinet, and the box transformer bracket (22) is provided at the rear bottom frame (112).

9. The cabin structure according to claim 8, wherein:
the cabin body (1) comprises a cabin housing (12), and the cabin housing (12) is configured to cover a periphery of the main body frame (11); and
the box transformer structure (2) further comprises a box transformer housing (23), and the box transformer housing (23) is configured to cover a periphery of the box transformer bracket (22) and is connected to the cabin housing (12).

10. The cabin structure according to claim 9, wherein the box transformer bracket (22) is connected to an inner wall of the box transformer housing (23) through a bearing assembly (3).

11. The cabin structure according to claim 10, wherein the bearing assembly (3) comprises a bearing portion (31) and a placement portion (32), the bearing portion (31) is provided at the box transformer bracket (22), the placement portion (32) is provided at an inner wall of the box transformer housing (23), and the bearing portion (31) is configured to to support the placement portion (32) in a third direction.

12. The cabin structure according to claim 1, wherein:
the main body frame (11) comprises a main frame (111) and a rear frame (112), the main frame (111) is configured for installing a rotor of the wind turbine generator set, and the rear frame (112) is configured to install the main control cabinet; and
one end of the box transformer bracket (22) in the first direction is installed at the main frame (111), and the other end of the box transformer bracket (22) in the first direction is installed at the rear frame (112).

13. The cabin structure according to claim 12, wherein the box transformer bracket (22) comprises:
a bearing crossbeam (221) extending along the first direction to form a first end corresponding to the main frame (111) and a second end corresponding to the rear bottom frame (112); and,
two connecting longitudinal beams (222) extending along the second direction, wherein one of the two connecting longitudinal beams (222) is configured to connect a first end of the bearing crossbeam (221) with the main frame (111), the other one of the two connecting longitudinal beams (222) is configured to connect the second end of the bearing crossbeam (221) with the rear bottom frame (112); and
the box transformer unit (21) provided at the bearing crossbeam (221).

14. The cabin structure according to claim 13, wherein the connecting longitudinal beam (222) is provided with a first connecting section (2221) connected to the bearing crossbeam (221), and a second connecting section (2222) connected to the main frame (111) or the rear bottom frame (112), and a cross-sectional area of the second connecting section (2222) in the second direction is larger than a cross-sectional area of the first connecting section (2221) in the second direction.

15. A wind turbine generator set, **characterized by** comprising the cabin structure according to any one of claims 1 to 14.
